# FASCICULE DE BREVET EUROPEEN

(11) **EP 0 406 143 B1**
(45) Date de publication et mention de la délivrance du brevet: **05.07.1995**
(21) Numéro de dépôt: 90470038.2
(22) Date de dépôt: 25.06.1990
(51) Int. Cl.: H05B 33/08, H02M 1/10

(54) **Voyant lumineux pouvant être alimenté avec une tension continue ou une tension alternative**
Leuchtanzeige, die mit Gleich- oder Wechselstrom betrieben werden kann
Indicator light which can be fed by a DC voltage or an AC voltage

(30) Priorité: 26.06.1989 FR 8908658
(43) Date de publication de la demande: 02.01.1991
(73) Titulaire: A.D.E.C.E.F., F-54123 Viterne (FR)
(72) Inventeur: Piclin, Jean-Jacques, F-54123 Viterne (FR); Glon, Christian, F-54590 Hussigny (FR)
(74) Mandataire: Poupon, Michel

(56) Documents cités:
- FR-A- 2 435 882
- PATENT ABSTRACTS OF JAPAN, vol. 7, no. 107 (E-174)[1252], 11 mai 1983;& JP-A-58 28 879 (HITACHI) 19-02-1983
- ELEKTOR ELECTRONICS, vol. 12, no. 135/136, juillet-août 1986, Herts, GB; G.SCHUMANN: "Current indicator"
- WIRELESS WORLD, vol. 88, no. 1555, avril 1982, pages 44-47, Olchester, GB; A.J.EWINS: "Digital multi-track tape recorder"

## Description

La présente invention a pour objet un voyant lumineux, en particulier pour l'éclairage de tableaux signalétiques, pouvant être alimenté indifféremment avec une tension continue ou une tension alternative, de valeurs variables.

On comprendra mieux l'invention à l'aide de la description faite ci-après en référence aux schémas annexés illustrant un mode non limitatif de mise en oeuvre, dans lesquels :
- la figure 1 est une vue d'un circuit complet ;
- la figure 2 est un schéma partiel de l'alimentation en continu ;
- la figure 3 est un schéma partie de l'alimentation alternative ;
- la figure 4 est une variante de la partie alternative ;
- la figure 5 est une variante avec une fonction test.

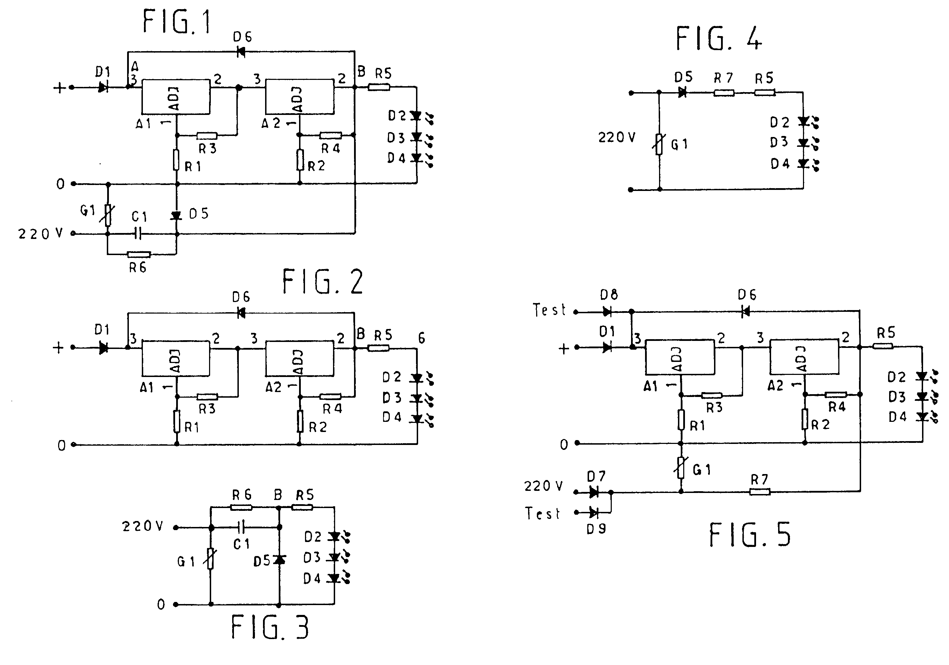

On comprendra que le circuit de la figure 1 est la combinaison des circuits des figures 2 et 3.

Le fonctionnement du circuit de la figure 2 est le suivant.

Le circuit comporte deux régulateurs de tension A1 et A2 qui alimentent des LEDS D2, D3, D4 au travers d'une résistance R5. De même l'alimentation de A1 et A2 se fait au travers d'un LED D1. Les régulateurs sont reliés en aval des LEDS D2, D3, D4 par des résistances R1, R2. Des résistances R3, R4 sont disposées entre l'amont des résistances R1, R2 et l'aval de chacun des régulateurs A1, A2, au point B pour ce dernier.

Le fonctionnement est le suivant.

Il est connu, bien entendu, d'utiliser des circuits permettant d'alimenter un voyant lumineux avec des tensions diverses et variables, mais il s'agit toujours de deux circuits distincts ; un circuit continu et un circuit alternatif. On n'a pas proposé pour l'instant de possibilité d'alimenter un voyant lumineux ou une lampe à travers un double circuit dont certains composants sont communs aux deux alimentations de courant continu et alternatif.

Un double circuit à composants communs à été présenté dans la revue WIRELESS WORD (vol. 88, N° 1555, avril 1982, P. 44-47) mais il concerne une application différente, celle des moteurs de magnétophone.

L'invention a pour but de remédier à ces inconvénients pour l'application à l'alimentation d'un voyant lumineux ou d'une lampe.

Conformément à l'invention ce but est atteint par un voyant lumineux, en particulier pour l'éclairage de tableaux signalétiques, pouvant être alimenté indifféremment avec une tension continue ou une tension alternative, de valeurs variables, voyant alimenté au travers d'un double circuit, respectivement une circuit basse-tension continue et d'autre part un circuit alternatif du secteur, une borne de chacun des deux circuits étant commune, caractérisé en ce que :
- le circuit basse-tension continue comporte deux régulateurs de tensions qui alimentent trois premières LEDS connectées en série au travers d'une résistance de charge ; l'alimentation des régulateurs se faisant au travers d'une quatrième LED, les bornes de contrôle des régulateurs étant reliées à ladite borne commune par deux résistances, deux autres résistances étant disposées entre l'amont des deux premières résistances respectivement et l'aval des régulateurs respectivement ;
- le circuit alternatif est constitué par les mêmes composants à savoir les trois premières LEDS et la résistance de charge, la chute de tension du secteur au point commun de la sortie du deuxième régulateur et la résistance de charge, dit point de référence, étant obtenue par un moyen limiteur et une diode n'autorisant que la partie positive du secteur, la protection des composants du circuit alternatif contre des surtensions sur le secteur étant obtenue par un varistor ;
- une autre LED est disposée entre ledit point de référence et l'entrée du premier régulateur avec son anode reliée au point de référence pour protéger les régulateurs lors de l'utilisation du secteur alternatif.

La tension aux bornes + et - variant entre 12 et 70 volts, les deux régulateurs de tension A1 et A2 fixent la tension au point B à 8 volts. Il s'ensuit un courant de 20mA dans les leds par l'intermédiaire de R5.

La tension minimum de fonctionnement est fixée à 12 volts.

La tension maximum de fonctionnement est imposée par les caractéristiques électriques des régulateurs.

Le fonctionnement du circuit de la figure 3 est le suivant.

Le circuit constitué par R5 et D2 à D4 reste identique à la partie continue décrite ci-dessus. La chute de tension de 220 volts à 8 volts au point B est obtenue par un condensateur C1 et une diode D5 n'autorisant que la partie positive du 220 volts.

Un varistor G1 protège C1, R5 et D2 à D4 des surtensions sur le 220 volts.

R6 décharge le condensateur lorsque le voyant n'est plus sous tension. Ceci permet d'éviter une surtension lors de la réaparition du 220 volts (surtension néfaste pour R5 et D2 à D4).

De même D6, représenté à la figure 1, protège les deux régulateurs A1 et A2 contre une tension supérieure au point B par rapport au point A d'entrée du régulateur A1, ce qui est le cas lors de l'utilisation du 220 volts alternatif.

En variante, représentée à la figure 4, C1 peut être remplacé par une résistance de puissance R7. R6 n'est alors plus utile.

Enfin, on a représenté à la figure 5 un schéma de fonction test. On prévoit deux bornes supplémentaires de test. Des diodes D1, D8, D7, D9 évitent le retour, lors du test, de la tension sur l'entrée + ou 220 volts, selon le cas.

## Revendications

1. Voyant lumineux, en particulier pour l'éclairage de tableaux signalétiques, pouvant être alimenté indifféremment avec une tension continue ou une tension alternative, de valeurs variables, voyant alimenté au travers d'un double circuit, respectivement un circuit basse-tension continue et d'autre part un circuit alternatif du secteur, une borne de chacun des deux circuits étant commune, caractérisé en ce que :
- le circuit basse-tension continue comporte deux régulateurs de tension A1 et A2 qui alimentent des LEDS D2, D3, D4 connectés en série au travers d'une résistance R5, l'alimentation de A1 et A2 se faisant au travers d'une LED D1, les bornes de contrôle des régulateurs A1 et A2 étant reliées à ladite borne commune par des résistances R1 et R2, des résistances R3 et R4 étant disposées entre l'amont des résistances R1 et R2 respectivement et l'aval des régulateurs A1 et A2 respectivement ;
- le circuit alternatif est constitué par les mêmes composants R5 et D2 à D4, la chute de tension du secteur à 8 volts au point commun de la sortie du régulateur A2 et la résistance R5 dite point B étant obtenue par un moyen limiteur (C1, R7) et une diode D5 n'autorisant que la partie positive du secteur, la protection des composants du circuit alternatif contre des surtensions sur le secteur étant obtenue par un varistor G1 ;
- une LED D6 est disposée entre le point B et l'entrée du régulateur A1 avec son anode reliée au point B pour protéger les régulateurs lors de l'utilisation du secteur alternatif.

2. Voyant lumineux selon la revendication 1, caractérisé en ce que le moyen limiteur est un condensateur C1 et en ce que une résistance R6 décharge le condensateur lorsque le voyant n'est plus sous tension.

3. Voyant lumineux selon la revendication 1, caractérisé en ce que le moyen limiteur est une résistance de puissance R7.

4. Voyant lumineux selon l'une quelconque des revendications 1 à 3 caractérisé en ce qu'il comporte une fonction test, sur deux bornes supplémentaires de test, des diodes D1, D8, D7, D9 évitent le retour, lors du test, de la tension sur l'entrée + ou 220 volts, selon le cas.

## Patentansprüche

1. Leuchtanzeige, insbesondere für die Beleuchtung einer Anzeigetafel, welche in gleicher Weise mit Gleichspannung oder Wechselspannung unterschiedlicher Stärke betrieben werden kann, wobei die Leuchtanzeige über eine doppelte Schaltung versorgt ist, nämlich ein Schaltkreis mit Niederspannungsgleichstrom und ein Schaltkreis mit Wechselstrom-Netzspannung, und wobei beide der Schaltungen eine gemeinsame Anschlußklemme haben, **gekennzeichnet durch folgendes**:
- der Schaltkreis mit Niederspannungsgleichstrom enthält zwei Spannungsregler A1 und A2, welche über einen Widerstand R5 in Serie geschaltete LEDs D2, D3, D4 bestromen, wobei die Bestromung von A1 und A2 über ein LED D1 erfolgt und die Steueranschlüsse der Regler A1 und A2 an der gemeinsamen Anschlußklemme mittels Widerständen R1 und R2 angeschlossen sind und wobei Widerstände R3 und R4 zwischen dem Eingang der jeweiligen Widerstände R1 und R2 und dem Auslaß des jeweiligen Reglers A1 und A2 angeordnet sind;
- der Wechselstromkreis ist durch die gleichen Bauteile R5 und D2 bis D4 gebildet, wobei der Abfall der Netzspannung auf 8 Volt an dem gemeinsamen Punkt am Auslaß des Reglers A2 und des Widerstandes R5, welcher Punkt B genannt wird, durch Begrenzungsmittel (C1, R7) und eine Diode D5 erreicht wird, welche nur die positiven Teile der Netzspannung durchlassen, und wobei der Schutz der Bauteile der Wechselstromschaltung gegen Überspannung des Netzes durch einen Varistor G1 erzielt wird;
- ein LED D6 ist zwischen dem Punkt B und dem Eingang des Reglers Al mit seiner Anode zum Punkt B hin angeschlossen, um die Regler während des Gebrauchs von Wechselstrom-Netzspannung zu schützen.

2. Leuchtanzeige nach Anspruch 1, **dadurch gekennzeichnet**, daß als Begrenzungsmittel ein Kondensator C1 vorgesehen ist und daß ein Widerstand R6 den Kondensator entleert, wenn die Leuchtanzeige nicht mehr unter Spannung steht.

3. Leuchtanzeige nach Anspruch 1, **dadurch gekennzeichnet,** daß als Begrenzungsmittel ein Leistungswiderstand R7 vorgesehen ist.

4. Leuchtanzeige nach einem der Ansprüche 1 bis 3, **dadurch gekennzeichnet**, daß sie eine Prüffunktion aufweist, welche zwei zusätzliche Prüfklemmenanschlüsse und Dioden D1, D8, D7, D9 zum Ausschließen des Rückflusses der Spannung fallweise am positiven oder 220 Volt-Eingang während des Tests hat.

## Claims

1. Luminous sign, more especially for the illumination of indicator boards, said sign being able to be supplied either with a direct voltage or with an alternating voltage, of variable values, said sign being supplied through a double circuit, ie. a direct low-voltage circuit and, on the other hand, an alternating circuit from the mains, one terminal of each of the two circuits being common, characterised in that:
- the direct low-voltage circuit comprises two voltage regulators A1 and A2, which supply LED's D2, D3 and D4 connected in series through a resistance R5, the supply of A1 and A2 being effected through an LED D1, the control terminals of the regulators A1 and A2 being connected to said common terminal via resistances R1 and R2, resistances R3 and R4 being diposed between the current-input side of the resistances R1 and R2 respectively and the current-output side of the regulators A1 and A2 respectively;
- the alternating circuit comprises the same components R5 and D2 to D4, the drop in mains voltage to 8 volts at the common point of the output of the regulator A2 and the resistance R5, called point B, being achieved by a limiting means (C1, R7) and a diode D5 only allowing the positive portion of the mains power to pass, the components of the alternating circuit being protected from excess voltages on the mains by a varistor G1;
- an LED D6 is disposed between point B and the input of the regulator A1 with its anode connected to point B in order to protect the regulators when the alternating means is being used.

2. Luminous sign according to claim 1, characterised in that the limiting means is a capacitor C1, and in that a resistance R6 discharges the capacitor when the sign is no longer under voltage.

3. Luminous sign according to claim 1, characterised in that the limiting means is a power resistance R7.

4. Luminous sign according to any of claims 1 to 3, characterised in that it includes a test function, on two supplementary test terminals, diodes D1, D8, D7 and D9 preventing the return of the voltage to the + input or 220 volts, whichever is the case, during the test.
